# Europäisches Patentamt

# European Patent Office

# Office européen des brevets

(19)

(11) Veröffentlichungsnummer: **0 015 515**
A1

## EUROPÄISCHE PATENTANMELDUNG

(21) Anmeldenummer: **80101007.5**

(22) Anmeldetag: **29.02.80**

(51) Int. Cl.³: **B 01 J 19/02,** F 16 L 58/14,
F 16 L 59/14
// C01F7/60, C01G49/10

(30) Priorität: **03.03.79 DE 2908414**

(43) Veröffentlichungstag der Anmeldung: **17.09.80**
**Patentblatt 80/19**

(84) Benannte Vertragsstaaten: **AT BE CH DE FR GB IT LU
NL SE**

(71) Anmelder: **BASF Aktiengesellschaft,
Carl-Bosch-Strasse 38, D-6700 Ludwigshafen (DE)**

(72) Erfinder: **Appl, Max, Dr., Danziger Strasse 9,
D-6701 Dannstadt-Schauernheim 1 (DE)**
Erfinder: **Voelkl, Erfried, Dr., Pierstrasse 10 C,
D-6710 Frankenthal (DE)**
Erfinder: **Stark, Hans, Dr., Uhlandstrasse 3,
D-6712 Bobenheim-Roxheim 2 (DE)**
Erfinder: **Peschau, Gerhard, Hauptstrasse 50 C,
D-6710 Frankenthal (DE)**
Erfinder: **Pforr, Gerhard, Dr., Budapester Strasse 26,
D-6700 Ludwigshafen (DE)**

(54) **Apparate und Rohrleitungen mit mehrschichtigen Wandungen für die Manipulation korrosiver und heisser Gase.**

(57) Apparate und Rohrleitungen für korrosive Gase weisen eine mehrschichtige Wandung auf. Der äußere Mantel (4,11) ist auf seiner Innenseite mit einer tragenden, wärmeisolierenden Schicht (3,13) aus korrosionsbeständigem und formstabilem Material ausgekleidet. Gegen den Innenraum des Rohres ist eine Schicht (2,12) mit einem Futter aus temperaturwechselbeständigem Glas oder Quarz abgedeckt.

EP 0 015 515 A1

Apparate und Rohrleitungen mit mehrschichtigen Wandungen
für die Manipulation korrosiver und heißer Gase

Vorliegende Erfindung betrifft Apparate und Rohrleitungen, in denen Gase hoher Temperatur, die hochkorrosive Bestandteile enthalten, umgesetzt bzw. transportiert oder sonstwie manipuliert werden und die gegenüber diesen Gasen beständig sein müssen.

Bei zahlreichen, insbesondere bei hohen Temperaturen durchgeführten chemischen Umsetzungen treten in den Reaktoren und in nachgeschalteten Apparaten sowie den dem Transport dienenden Rohrleitungen korrosiv wirkende Gase auf, die entweder als Reaktionskomponenten eingesetzt, oder bei der Umsetzung gebildet werden. Beispielsweise enthalten die bei der Herstellung von Aluminiumchlorid durch Umsetzung von Bauxit oder von Tonerde mit Chlor in Gegenwart eines Reduktionsmittels, wie Kohlenstoff oder Kohlenmonoxid abgehenden Reaktionsgase u.a. neben Aluminiumchlorid Phosgen und nicht umgesetztes Chlor, das insbesondere bei hohen Temperaturen von ca. 500°C auf die bekannten Werkstoffe, die für die Herstellung von Apparaten üblicherweise eingesetzt werden, außerordentlich korrosiv wirkt. Auch bei der Herstellung von wasserfreiem Eisen(III)-chlorid durch Umsetzung von Chlor mit Eisenschrott entsteht ein stark korrosiv wirkendes Reaktionsabgas, das neben Eisen(III)--chlorid Chlor enthält.

Ki /BL

0015515

Bei der Herstellung von Aluminiumchlorid durch Umsetzung von Bauxit mit Chlor und Kohlenmonoxid bei etwa 900°C setzt man Öfen ein, die aus einem Eisenmantel bestehen. Der innere Teil besteht aus einem Zylinder, der aus keramischem Material hergestellt ist. Der zwischen äußerem Mantel und dem inneren Zylinder verbleibende Hohlraum ist mit einem wärmedämmenden Stoff, wie Kieselgur, Schlackenwolle oder dgl. ausgefüllt (Z. Ang. Chem. 43, 1930, Seite 879), um die im Inneren erforderliche Reaktionstemperatur halten zu können.

Verwendet man dagegen anstelle des Bauxits ɣ-Tonerde und chloriert in Gegenwart von schmelzflüssigem Alkalialuminiumchlorid bei niedrigeren Temperaturen von 400 bis 600°C (Z. Ang. Chem. 72, 1960, S. 850 ff), so setzt man Öfen ein, bei denen die Isolierschicht entfällt und die zusätzlich von außen gekühlt werden, um die niedrigere Umsetzungstemperatur einhalten zu können. Zur Entstaubung werden die den Reaktor verlassenden Gase und Dämpfe durch ebenfalls mit keramischem Material ausgekleidete Rohre in ein mit Bimssteinen gefülltes und beheiztes Rücklauffilter geleitet. Rohre und Filter bzw. deren Wandungen werden auf 180 bis 300°C gehalten.

Die Standzeit solcher mit keramischem Material ausgekleideten Apparate und Rohrleitungen läßt aber zu wünschen übrig. Die keramischen Materialien verlieren nämlich durch die Einwirkung der korrosiv wirkenden Reaktionsabgase ihre mechanische Festigkeit. Diese geht noch schneller verloren, wenn zwischen der inneren keramischen Schicht und dem äußeren Stahlmantel wärmedämmendes Material angeordnet ist. Infolge des Festigkeitsverlustes wird die keramische Auskleidung durch die gleichzeitig erodierende Wirkung des Reaktionsgases rasch zerstört.

0015515

In den Fällen, bei denen der äußere Metallmantel beheizt werden muß, um beispielsweise bei der Aluminiumchlorid- oder Eisenchloridsynthese eine Verfestigung von Bestandteilen des Reaktionsgases und ein Zuwachsen der Rohrleitungen und Apparate zu verhindern, tritt ein weiterer, die Betriebssicherheit mindernder Nachteil ein. Sobald nämlich Risse in der keramischen Auskleidung entstehen, kann das Reaktionsgas direkt an den erhitzten Eisenmantel gelangen, der wegen der hohen Temperaturen rasch korrosiv zerstört wird. Die Gefahr, daß heißes Reaktionsgas mit dem Metallmantel in Berührung kommt, ist bevorzugt an den Flanschverbindungen gegeben, für die hochtemperatur- und korrosionsstabile Dichtungen eingesetzt werden müssen, um Spalte zwischen den Auskleidungsmaterialien zu vermeiden.

Mit den bekannten Dichtungsmaterialien, wie beispielsweise Asbest, können zwar gasdichte Flanschverbindungen im Bereich der inneren, aus keramischem Material bestehenden Schicht hergestellt werden, jedoch werden auch bei derartigen Dichtungsmaterialien mit zunehmender Standzeit und Reaktionsgastemperatur Korrosionserscheinungen festgestellt, so daß es zu Leckagen kommen kann.

Bei Reaktionsgasen, die hochgiftige Bestandteile, wie Phosgen, enthalten, und die bei der Chlorierung von Bauxit oder Tonerde anfallen, bedeuten diese Leckagen darüber hinaus eine ernste Gefahr für das Bedienungspersonal.

Prinzipiell ist es möglich, zur Vermeidung der Korrosion des äußeren Metallmantels, diesen durch direkte Wasserkühlung auf einer so niedrigen Temperatur zu halten, daß selbst bei Vordringen der Gase bis zum Metallmantel wegen der niedrigen Temperatur keine Korrosion auftritt. Bei Gasen, die sublimierbare Verbindungen enthalten, z.B.

den Reaktionsabgasen der Aluminium- oder Eisenchloridsynthese, ist jedoch dann die Gefahr gegeben, daß die Kondensationstemperatur unterschritten wird und sich diese Verbindungen an den Innenwandungen ablagern, was schließlich zu Verstopfungen führt. Eine Wasserkühlung birgt bei Aluminiumchlorid enthaltenden Prozeßgasen noch eine zusätzliche Gefahrenquelle in sich, da das Aluminiumchlorid bei nicht auszuschließenden Wassereinbrüchen sich explosionsartig hydrolytisch zersetzen würde.

Der vorliegenden Erfindung lag daher die Aufgabe zugrunde, Apparate und Rohrleitungen mit mehrschichtigen Wandungen, in denen korrosive und heiße Gase manipuliert werden, anzugeben, die die oben aufgezeigten Mängel nicht besitzen und die vor allem auch über längere Zeiten hinweg nicht durch Korrosion angegriffen werden.

Es wurde nun gefunden, daß diese Aufgabe dadurch gelöst werden kann, daß der äußere Mantel aus Metall innen mit einer tragenden, wärmeisolierenden Schicht aus korrosionsbeständigem und formstabilem Material ausgekleidet ist, die gegen den Innenraum des Apparates oder Rohres mit einem Futter aus temperaturwechselbeständigem Glas oder Quarz abgedeckt ist.

Als Material für den metallischen Mantel kommen z.B. Eisenwerkstoffe wie Stahl oder auch Titan und seine Legierungen in Frage.

Als Material für die tragende, wärmeisolierende Schicht kommt insbesondere geschäumtes Glas oder Quarz mit geschlossenen Glaszellen in Betracht. In Abhängigkeit von den auftretenden Temperaturen kann man normales Glas oder auch besonders temperaturwechselbeständige Gläser, die Aluminium und/ oder insbesondere Bor enthalten, einsetzen.

Die gleichen Materialien werden auch, in nicht geschäumtem Zustand, für das Futter verwendet. Im Falle von nicht oxidierenden Gasen läßt sich beispielsweise auch Kohlenstoff, z.B. in Form von Hartbrandkohle, Graphit oder Glaskohle einsetzen.

Die Temperatureinsatzgrenze ist bei Verwendung von wärmestabilen Gläsern als Baumaterial für das Futter und die wärmeisolierende Schicht durch den Erweichungspunkt des verwendeten Glastyps gegeben und liegt beispielsweise bei 500 bis 600°C. Bei höheren Temperaturen wird zweckmäßig Quarz eingesetzt, dessen Erweichungspunkt bei etwa 1500°C liegt.

Die Dicke der wärmeisolierenden Schicht wird so gewählt, daß die Temperatur bis zum äußeren metallischen Mantel auf etwa Raumtemperatur abfällt. Bei Raumtemperatur ist Stahl oder Titan gegen z.B. Phosgen absolut beständig, so daß diese Werkstoffe als Material für den Mantel gewählt werden können.

Es ist nicht erforderlich, daß das Futter eine durchgehende geschlossene Oberfläche aufweist, sondern es kann das Futter aus mehreren Einzelteilen bestehen, die durch Dehnungsfugen voneinander abgesetzt sind. Auch Risse und Spalte in der wärmeisolierenden Schicht stören nicht, wenn diese so klein gehalten werden, daß das heiße korrosive Gas aus dem inneren Freiraum nur so langsam durch diese Dehnungsfugen, Risse und Spalte diffundieren kann, daß der konvektive Wärmetransport vernachlässigbar klein ist und eine Aufheizung des äußeren metallischen Mantels auf korrosionsgefährdete Temperaturbereiche nicht stattfindet. Aus diesem Grunde ist eine Abdichtung im Bereich des Futters und der wärmeisolierenden Schicht nicht erforderlich, solange die zum Ausgleich der Wärmedehnung erforderlichen Dehnungsfugen so klein bemessen werden können, daß Konvektion oder

0015515

Strömung des heißen Prozeßgases oder seiner Komponenten zum äußeren metallischen Mantel nicht stattfindet und nur Diffusion möglich ist.

Aus diesem Grunde kann man auch im Bereiche von Flanschverbindungen auf eine Gasdichtung im Bereiche des Futters und der wärmeisolierenden Schicht ganz verzichten und die Gasdichtung lediglich auf den Stahlflansch verlegen und hier technisch übliches Dichtungsmaterial, beispielsweise Gummi, verwenden, das bei Raumtemperatur gegen viele Gase beständig ist und somit eine absolute Gasabdichtung gewährleistet.

Im Reaktionsgas enthaltene sublimierbare Komponenten, bei-spielsweise Aluminiumchlorid oder Eisenchlorid, diffun-dieren ebenfalls durch Fugen, Risse und Spalte im Futter bzw. der wärmeisolierenden Schicht. Auf dem Wege zum äußeren Metallmantel passieren sie jedoch in der Wärmedämmschicht einen Bereich, in dem die Temperatur unter die Sublimationstemperatur abfällt. Hier kondensieren die sublimierbaren Komponenten des Gases. Dies hat den Vorteil, daß eine zusätzliche Gasabdichtung bewirkt wird und der äußere metallische Mantel infolge der verringerten Diffusionsgeschwindigkeit des Gases, verbunden mit einem verringerten Wärmetransport noch wirksamer gegen eine die Korrosion fördernde Temperaturerhöhung geschützt wird. Andererseits wird durch die isolierende Wirkung der Wärmedämmschicht ein Temperaturabfall im Bereiche des Futters und damit eine Kondensation und Anfall von Feststoffen an den Innenwandungen und somit Verstopfungen verhindert.

Zusammenfassend kann also festgestellt werden, daß bei den erfindungsgemäßen mehrschichtigen Wandungen von Apparaten und Rohrleitungen für die Manipulation korrosiver und heißer Gase eine Korrosion der äußeren Metallmäntel praktisch ausgeschlossen ist und daß demzufolge keine Leckagen auftreten können und aggresive Gase, die in der Regel auch giftig sind, wie beispielweise Phosgen, die eine Gefahr für Personal und Umwelt bedeuten, nicht mehr ungehindert entweichen können. Ferner können sublimierbare Substanzen im Freiraum der Apparate und Rohre nicht mehr kondensieren, da das Futter durch die wärmeisolierende Schicht praktisch auf der Temperatur des Reaktionsgases gehalten wird, und auf diese Weise Verstopfungen vermieden werden. Die erfindungsgemäßen Apparate und Rohrleitungen mit mehrschichtigen Wandungen sind insbesondere für die Manipulation von heißen Reaktionsgasen bei der Synthese von Aluminiumchlorid durch Umsetzung von Chlor und Kohlenmonoxid mit Tonerde, bzw. durch Umsetzung aus den Elementen oder bei der Synthese von Eisenchlorid aus den Elementen geeignet.

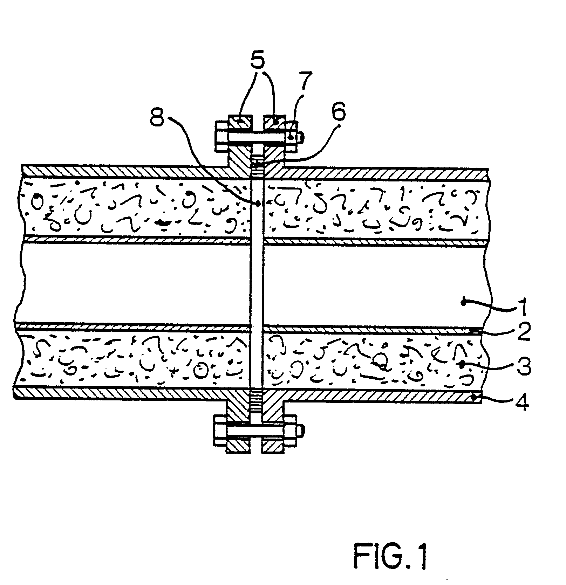

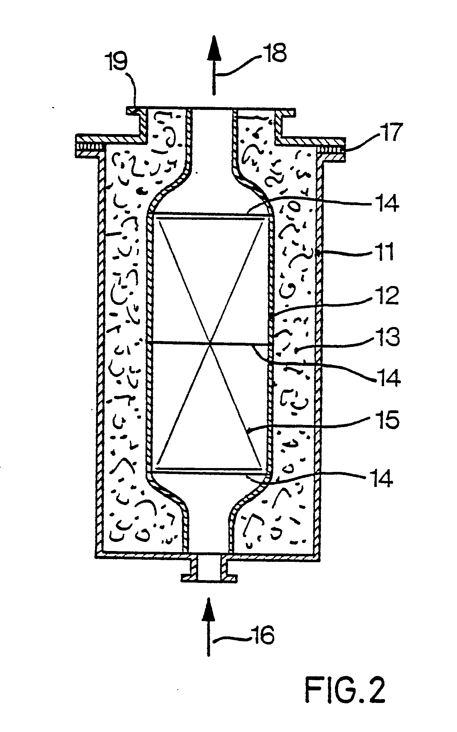

In den Figuren 1 und 2 wird die erfindungsgemäße mehrschichtige Wandung näher erläutert.

In Figur 1 wird ein Längsschnitt durch zwei mit einer Flanschverbindung zusammengefügter Rohrleitungen und in Figur 2 ist ein senkrechter Schnitt durch einen Phosgenreaktor dargestellt.

Durch die in Figur 1 dargestellte Rohrleitung werden beispielsweise die bei der Aluminiumchlorid-Synthese durch Umsetzung von Tonerde mit Chlor und Kohlenstoff und/oder Kohlenmonoxid erhaltenen Reaktionsgase geleitet. Diese Gase enthalten u.a. neben Aluminiumchlorid-Dampf Chlor und Phosgen.

Das Reaktionsgas strömt durch den Freiraum 1. Dieser wird durch das Futter 2 aus temperaturbeständigem Glas, z.B. Borsilikatglas, oder Quarz begrenzt. Das Futter wird von der wärmeisolierenden Schicht 3 aus z.B. geschäumtem,

0015515

temperaturbeständigem Glas oder Quarz statisch getragen. Die wärmeisolierende Schicht ihrerseits ist nach außen von dem Stahlmantel 4 umgeben.

Zwischen den Stahlflanschen 5 liegen die Gummidichtungen 6, die durch die Schrauben 7 zusammengepreßt werden. Zwischen den beiden Rohrenden ist im Bereich des Futters 2 und der wärmeisolierenden Schicht 3 eine Dehnungsfuge 8.

Das Reaktionsgas hat eine Temperatur von beispielsweise 400 bis 500°C. Die aus einem geschäumten Borosilikatglas bestehende wärmeisolierende Schicht hat eine Stärke von ca. 200 mm, so daß die Temperatur am äußeren Stahlmantel nur etwa 20 bis 30°C beträgt, bei der Stahl gegen Phosgen absolut korrosionsbeständig ist. Auch an der Dehnungsfuge 8 ist ein ähnlicher Temperaturabfall festzustellen, da wegen ihrer geringen Dicke von ca. 1 mm oder kleiner das Reaktionsgas nur nach außen in Richtung Mantel diffundieren kann. Wegen des damit verbundenen starken Temperaturabfalles besitzen die Gummidichtungen 6 und der Stahlflansch 5 ebenfalls nur Raumtemperatur und werden somit korrosiv nicht angegriffen. Darüber hinaus kondensiert in der Dehnungsfuge 8 wegen des Temperaturabfalles etwas Aluminiumchlorid aus, wodurch die zum Stahlflansch 5 und Dichtung 6 diffundierende Gasmenge noch weiter verringert wird und Flansch und Dichtung zusätzlich geschützt werden. Ein ähnlicher Mechanismus basierend auf Diffusion und Diffusionstrennung läuft ab, wenn im Futter 2 oder der wärmeisolierenden Schicht 3 ein in Richtung zum Stahlmantel verlaufender Riß oder Spalt entsteht.

In dem in Figur 2 dargestellten Phosgenreaktor werden je 100 Nm$^3$/h Chlor und Kohlenmonoxid in Gegenwart von Aktivkohle bei 500°C zu einem Reaktionsgasgemisch umgesetzt, das neben Phosgen noch Chlor und Kohlenmonoxid enthält.

0015515

In dem Stahlbehälter 11 sind Glasschüsse 12 aus temperaturbeständigem Glas mit einem Durchmesser von 800 cm eingesetzt.
Die das Futter bildenden Glasschüsse werden von der wärmeisolierenden Schicht 13 aus geschäumtem, ebenfalls temperaturbeständigem Glas oder Quarz getragen. Zwischen den
einzelnen Glasschüssen sind Dehnungsfugen 14 angeordnet,
die nicht mit Dichtungsmaterial ausgefüllt sind.

Der von den Glasschüssen umgebene innere Freiraum ist mit
Aktivkohle gefüllt. Unter dem katalytischen Einfluß dieser
Aktivkohleschüttung wird aus durch Leitung 16 eingeführtem
Chlor und Kohlenmonoxid unter Entwicklung von Wärme Phosgen
gebildet. Das Reaktionsgas, das neben Phosgen noch nicht
umgesetztes Chlor und Kohlenmonoxid enthält, weist eine
Temperatur von ca. 500°C auf. Auch die Aktivkohleschüttung 15
und das Glasfutter 12 weist diese Temperatur auf. Die wärmeisolierende Schicht 13, hat eine Stärke von durchschnittlich 200 mm und ist somit etwa so dimensioniert, daß der
Stahlmantel 11 etwa Raumtemperatur, d.h. 20 bis 30°C hat.
Wie bei Figur 1 erläutert, findet auch hier praktisch kein
konvektiver Wärmetransport statt und es kann allenfalls
etwas Gas durch Risse, Spalte oder Dehnungsfugen im
Futter 11 bzw. der wärmeisolierenden Schicht 13 zum Stahlmantel 11 diffundieren. Mit dieser Diffusion ist aber
praktisch kein Wärmetransport verbunden. Auch die Flanschverbindungen 17 und 19 sind praktisch nicht durch Korrosion
gefährdet.

Das heiße Reaktionsgas verläßt den Reaktor durch eine
Leitung 18, wie sie beispielsweise in Figur 1 dargestellt
ist.

0015515

Patentansprüche

1. Apparate und Rohrleitungen mit mehrschichtigen Wandungen für die Manipulation korrosiver und heißer Gase, dadurch gekennzeichnet, daß der äußere Mantel (4 bzw. 11) aus Metall innen mit einer tragenden, wärmeisolierenden Schicht (3 bzw. 13) aus korrosionsbeständigem und formstabilem Material ausgekleidet ist, das gegen den Innenraum des Apparates oder Rohres mit einem Futter (2 bzw. 12) aus temperaturwechselbeständigem Glas oder Quarz abgedeckt ist.

2. Apparate und Rohrleitungen nach Anspruch 1, dadurch gekennzeichnet, daß der Mantel (4 bzw. 11) aus Eisenwerkstoffen oder Titan und seinen Legierungen besteht.

3. Apparate und Rohrleitungen nach Ansprüchen 1 und 2, dadurch gekennzeichnet, daß das Futter (2 bzw. 12) aus einem Aluminium und/oder Bor enthaltendem temperaturbeständigem Glas oder Quarz besteht.

4. Apparate und Rohrleitungen nach Ansprüchen 1 bis 3, dadurch gekennzeichnet, daß die wärmeisolierende Schicht (3 bzw. 13) aus geschäumtem Bor und/oder Aluminium enthaltendem temperaturbeständigem Glas und/oder geschäumtem Quarz besteht.

Zeichn.

FIG.1

FIG.2

Europäisches Patentamt

**EUROPÄISCHER RECHERCHENBERICHT**

00155515

Nummer der Anmeldung

EP 80 10 1007

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 706 143 (H. LAUSCH) <br> * Das ganze Dokument * <br><br> -- | 1-3 |
| | DE - A - 2 327 799 (H. LAUSCH) <br> * Seite 3, Zeile 28 bis Seite 6, Zeile 3; Abbildungen 1,2 * <br><br> -- | 1-3 |
| | DE - A - 2 229 699 (H. LAUSCH) <br> * Seite 1, Zeilen 1-10; Seite 3, Zeile 8 bis Seite 4, Zeile 29; Abbildungen 1-3 * <br><br> -- | 1-3 |
| X | US - A - 3 129 727 (S. TANAKA) <br> * Spalte 1, Zeilen 12-20; Spalte 1, Zeile 50 bis Spalte 2, Zeile 31; Spalte 2, Zeile 46 bis Spalte 4, Zeile 38; Abbildungen 1-4 * <br><br> -- | 1,2,4 |
| A | US - A - 2 545 686 (R.B. COLLINS) | |
| A | US - A - 4 080 435 (R.M. POPE) | |
| A | FR - A - 1 450 148 (ALLIED CHEMICAL) <br><br> ----- | |

**KLASSIFIKATION DER ANMELDUNG (Int.Cl. 3)**

B 01 J 19/02
F 16 L 58/14
     59/14//
C 01 F 7/60
C 01 G 49/10

**RECHERCHIERTE SACHGEBIETE (Int. Cl. 3)**

B 01 J 19/02
F 16 L 58/04
     58/14
     59/14
C 01 F 7/58
     7/60
C 01 G 49/10

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-06-1980 | SIEM |

EPA form 1503.1 06.78